(19) **Europäisches Patentamt**

**European Patent Office**

**Office européen des brevets**

(11) Numéro de publication : **0 567 366 A1**

(12) # DEMANDE DE BREVET EUROPEEN

(21) Numéro de dépôt : **93400904.4**

(22) Date de dépôt : **06.04.93**

(51) Int. Cl.⁵ : **B32B 7/02**, B32B 15/08, F16F 9/30, F16F 3/08, G10K 11/16

(30) Priorité : **22.04.92 FR 9204927**

(43) Date de publication de la demande : **27.10.93 Bulletin 93/43**

(84) Etats contractants désignés : **AT BE CH DE DK ES FR GB IT LI LU NL PT SE**

(71) Demandeur : **SOLLAC Immeuble Elysées-La Défense, 29 Le Parvis F-92800 Puteaux (FR)**

(72) Inventeur : **Tremouilles, Gilles 1, Avenue Pierre Grenier F-92100 Boulogne Billancourt (FR)**

(74) Mandataire : **Polus, Camille et al c/o Cabinet Lavoix 2, Place d'Estienne d'Orves F-75441 Paris Cedex 09 (FR)**

(54) **Tôle sandwich.**

(57) Cette tôle sandwich comporte des couches (16, 18, 20) de polymères intercalées entre deux tôles métalliques externes (12,14). Deux couches adjacentes quelconques comportent des polymères de modules d'élasticité différents. Des couches de polymères de module d'élasticité faible alternent avec des couches de polymères de module d'élasticité élevé. Les couches (16,18) adjacentes aux tôles métalliques externes (12,14) comprennent un polymère de module d'élasticité inférieur à celui du polymère de la couche suivante (20).

FIG·1

EP 0 567 366 A1

La présente invention concerne une tôle sandwich.

Les tôles sandwichs sont utilisées en particulier pour la fabrication d'éléments de carrosserie de véhicules ou de panneaux d'habillage d'appareils ménagers.

Les tôles sandwichs ont des propriétés d'amortissement des vibrations qui sont mises à profit en particulier pour réduire la propagation du bruit.

On connaît déjà dans l'état de la technique des tôles sandwichs comportant deux tôles métalliques externes entre lesquelles est intercalée une couche de polymère. Lorsque la tôle sandwich vibre, elle est soumise à des flexions alternatives. La couche de polymère intercalée entre les tôles métalliques amortit les contraintes de flexion auxquelles est soumise la tôle sandwich en les convertissant, en partie, en contraintes de cisaillement.

Pour augmenter la capacité d'amortissement des tôles sandwich, il est connu d'ajouter entre les deux tôles métalliques externes des tôles métalliques internes intercalées entre deux couches de polymère.

Ceci a pour inconvénient qu'en augmentant la capacité d'amortissement de la tôle sandwich on augmente notablement l'épaisseur et le poids de cette tôle.

L'invention a pour but d'obtenir des tôles sandwichs légères et peu épaisses ayant un coefficient d'amortissement élevé.

A cet effet l'invention a pour objet une tale sandwich comprenant deux tôles métalliques externes entre lesquelles sont intercalées des couches de matériaux internes, caractérisée en ce qu'elle comporte un nombre impair, au moins égal à trois, de couches de polymères intercalées entre les deux tôles métalliques, deux couches adjacentes quelconques comportant des polymères de modules d'élasticité différents de manière que des couches de polymères de module d'élasticité faible alternent avec des couches de polymères de module d'élasticité élevé, les couches de polymères adjacentes à une des tôles métalliques externes comprenant un polymère de module d'élasticité inférieur à celui du polymère de la couche suivante.

Suivant un premier mode de réalisation de l'invention:
- la tôle sandwich comporte trois couches de polymères intercalées entre les deux tôles métalliques externes, les deux couches intermédiaires disposées de part et d'autre de la couche centrale comportant un polymère identique ;
- le module d'élasticité de la couche centrale est dix fois supérieur à celui des couches intermédiaires , pour des températures inférieures ou égales à la température ambiante ;
- les deux couches intermédiaires ont une température de transition vitreuse voisine de la température ambiante et inférieure à la température de transition vitreuse de la couche centrale ;
- la tôle sandwich comporte une couche centrale de polyéthylène téréphtalate et deux couches intermédiaires d'éthylène-acétate de vinyle ou bien la tôle sandwich comporte une couche centrale de polychlorure de vinyle et deux couches intermédiaires d'éthylène-acétate de vinyle;

Suivant un second mode de réalisation de l'invention:
- la tôle sandwich comporte cinq couches de polymères intercalées entre les deux tôles externes, certaines couches comportant un premier polymère de module d'élasticité faible, les autres couches comportant un deuxième polymère de module d'élasticité élevé, les couches de module d'élasticité faible alternant avec les couches de module d'élasticité élevé ;
- la tôle sandwich comporte en alternance des couches de polymères de température de transition vitreuse voisine de la température ambiante et des couches de polymère de température de transition vitreuse beaucoup plus élevée que la température ambiante ;
- les couches de module d'élasticité faible comprennent de l'éthylène-acétate de vinyle, et les couches de module d'élasticité élevé comprennent du polyéthylène téréphtalate.

Des exemples de réalisation de l'invention seront décrits ci-dessous en se référant aux dessins annexés dans lesquels :
- la figure 1 est une vue en coupe schématique d'une tôle sandwich selon un premier mode de réalisation de l'invention ;
- la figure 2 est un diagramme montrant, d'une part, les courbes de variation du module d'élasticité en fonction de la température de la tôle sandwich de la figure 1 et des polymères utilisés dans cette tôle, et d'autre part, les courbes de variation du coefficient d'amortissement en fonction de la température de ces polymères ;
- la figure 3 est une vue en coupe schématique d'une tôle sandwich selon un second mode de réalisation de l'invention.

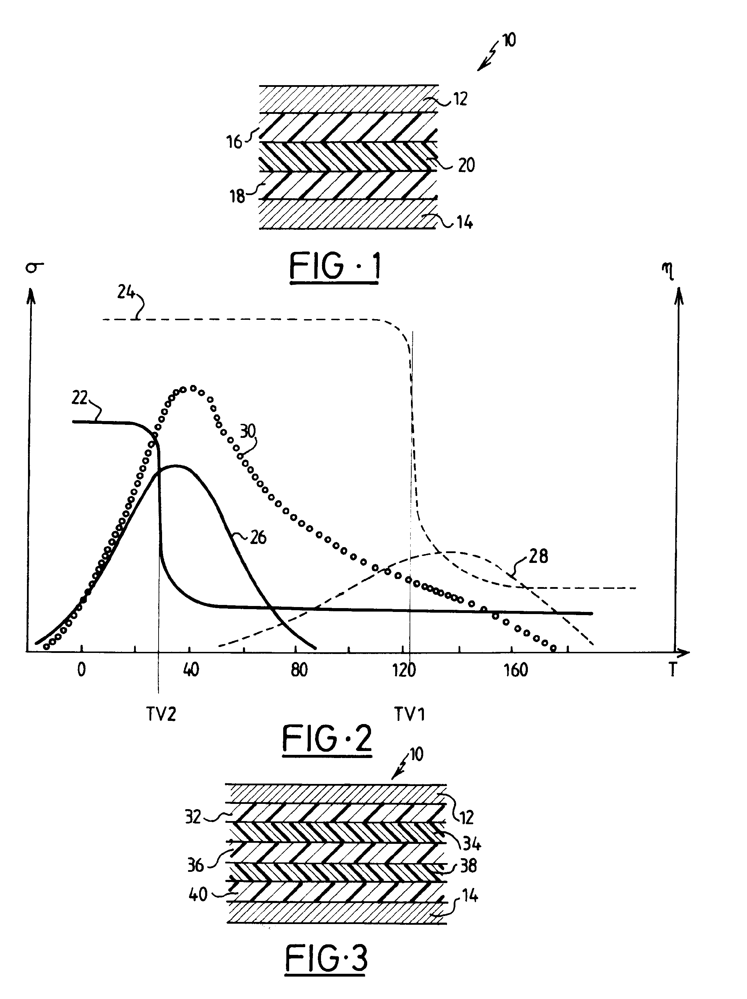

On voit sur la figure 1 une tôle sandwich selon un premier mode de réalisation de l'invention désigné par la référence générale 10. Cette tôle sandwich 10 comporte deux tôles métalliques externes 12,14 identiques. La première tôle métallique 12 délimite la face supérieure de la tôle sandwich 10, en considérant la figure 1, et la seconde tôle métallique 14 délimite la face inférieure de la tôle sandwich 10.

Trois couches de polymères 16,18,20 sont intercalées entre les deux tôles métalliques 12,14.

La couche centrale 20, intercalée entre les couches intermédiaires 16,18, est constituée d'un polymère d'un premier type dont les propriétés seront décrites ultérieurement. Les couches intermédiaires 16,18 sont constituées d'un même polymère d'un deuxième type dont les propriétés seront décrites ultérieurement.

Les couches 16,18,20 de polymères sont caractérisées en particulier par leur module d'élasticité $\sigma$ et par leur coefficient d'amortissement $\eta$. Sur la figure 2 on a représenté un diagramme ayant un axe des températures T en abscisses et deux axes en ordonnées. Le premier axe des ordonnées, à gauche en considérant la figure 2, est l'axe des modules d'élasticité $\sigma$. Le deuxième axe des ordonnées, à droite en considérant la figure 2, est l'axe des coefficients d'amortissement $\eta$.

Sur ce diagramme, on a représenté les courbes 22,24 de variations du module d'élasticité $\sigma$ en fonction de la température T, dans le cas du polymère du premier type constituant la couche centrale 20 (courbe 24) et dans le cas du polymère du deuxième type constituant les couches intermédiaires 16,18 (courbe 22).

Pour des températures inférieures ou égales à la température ambiante, le polymère de la couche centrale 20 a un module d'élasticité nettement supérieur au module d'élasticité du polymère des couches intermédiaires 16,18 de la tôle sandwich.

On a également représenté sur ce diagramme les courbes 26,28,30 de variations du coefficient d'amortissement $\eta$ en fonction de la température T, dans le cas du polymère de la couche centrale 20 (courbe 28), dans le cas du polymère des couches intermédiaires 16,18 (courbe 26), et dans le cas de l'ensemble de la tôle sandwich 10 (courbe 30). Les propriétés mécaniques du polymère constituant la couche centrale 20 se distinguent de celles du polymère constituant les couches intermédiaires 16,18, et seront explicitées ci-dessous en considérant les courbes qu'on vient de mentionner.

En considérant les courbes 22,24 d'évolution du module d'élasticité $\sigma$ en fonction de la température T, on constate que la valeur du module d'élasticité $\sigma$ d'un polymère chute de façon très importante lors du passage par la température de transition vitreuse TV1,TV2.

Cette température correspond à la température du polymère au delà de laquelle des mouvements de segments de macromolécules deviennent possibles. Le passage de la température de transition vitreuse affecte donc notablement le comportement mécanique du polymère.

Le polymère de la couche centrale 20 a une température de transition vitreuse TV1 supérieure à la température de transition vitreuse TV2 du polymère des couches 16,18 intermédiaires.

Comme on peut le voir en considérant les courbes 26,28 d'évolution du coefficient d'amortissement $\eta$ en fonction de la température T, l'amortissement est maximal après le passage par la température de transition vitreuse TV1,TV2.

Le polymère des couches intermédiaires 16,18, a une température de transition vitreuse TV2 voisine d'une température de l'ordre de 20° qui sera appelée par la suite température ambiante. Le polymère de la couche centrale 20 a une température de transition vitreuse TV1 très élevée par rapport à la température de transition vitreuse des couches intermédiaires.

De cette façon, au voisinage de la température ambiante, les capacités d'amortissement de la tôle sandwich 10 sont dues pour l'essentiel au coefficient d'amortissement élevé du polymère des couches intermédiaires 16,18 enserrant la couche centrale 20. Pour des températures élevées, les capacités d'amortissement de la tôle sandwich 10 sont dues pour l'essentiel au coefficient d'amortissement élevé du polymère de la couche centrale 20.

Comme on peut le voir en considérant la courbe 30 d'évolution du coefficient d'amortissement $\eta$ de la tôle sandwich 10 en fonction de la température T, le coefficient $\eta$ d'amortissement a une valeur élevée sur un large intervalle de température dont les bornes inférieure et supérieure correspondent à peu près l'une à TV2 et l'autre à TV1.

Pour des températures inférieures ou égales à la température ambiante, les couches intermédiaires 16,18 ont un coefficient d'amortissement élevé et sont soumises à des contraintes de cisaillement imposées par les tôles métalliques 12,14 et la couche centrale 20 rigide.

Le polymère de la couche centrale 20 a de préférence un module d'élasticité dix fois supérieur à celui du polymère des couches intermédiaires 16,18, pour des températures inférieures ou égales à la température ambiante.

On donnera ci-dessous des exemples de tôles sandwichs comportant deux tôles métalliques externes 12,14, une couche centrale 20 d'un polymère d'un premier type et deux couches intermédiaires 16,18 d'un polymère d'un deuxième type.

| Exemple 1 : | épaisseur (en mm) | matériau |
|---|---|---|
| tôles métalliques externes | 0,35 | acier |
| couche centrale | 0,2 | polychlorure de vinyle (PVC) |
| couches intermédiaires | 0,1 | éthylène-acétate de vinyle (EVA) |

| Exemple 2 : | épaisseur (en mm) | matériau |
|---|---|---|
| tôles métalliques externes | 0,35 | acier |
| couche centrale | 0,098 | polyéthylène téréphtalate (PET) |
| couches intermédiaires | 0,1 | éthylène-acétate de vinyle (EVA) |

La couche centrale 20 de la tôle sandwich 10 peut être constituée d'autres types de polymères, par exemple le polypropylène (PP), le polyméthacrylate de méthyle (PMMA) ou le polyamide 6-6 (PA 6-6).

De même d'autres types de polymères peuvent constituer les couches intermédiaires 16,18. On choisira le polymère des couches 16,18 parmi ceux qui ont un coefficient d'amortissement élevé au voisinage de 20° (température ambiante), par exemple parmi les polyuréthannes (PUR) ou les polyéthylènes (PE).

La tôle sandwich peut être fabriquée en laminant un film de polymère du premier type (couche centrale) entre deux tôles en acier enduites d'une couche de polymère du deuxième type (couches intermédiaires).

On décrira maintenant une tôle sandwich selon un second mode de réalisation de l'invention, en regard de la figure 3. Les éléments de la figure 3 analogues aux éléments de la figure 1 sont désignés par des références identiques.

Dans ce cas, la tôle sandwich 10 comporte cinq couches 32,34,36,38,40 de polymères intercalées entre les deux tôles métalliques externes 12,14.

Les couches 32, 40, adjacentes l'une à la tôle métallique 12 et l'autre à la tôle métallique 14, et la couche centrale 36 sont constituées d'un même polymère. Le polymère de ces couches 32,36,40 a une température de transition vitreuse voisine de la température ambiante. Le coefficient d'amortissement des couches 32,36,40 est donc maximum au voisinage de la température ambiante.

Les couches 34,38, intermédiaires entre les couches 32,40 adjacentes aux tôles métalliques 12,14 et la couche centrale 36, sont constituées d'un même polymère. Le polymère de ces couches 34,38 a une température de transition vitreuse plus élevée que la température ambiante.

Pour les températures inférieures ou égales à la température ambiante, le module d'élasticité du polymère des couches intermédiaires 34,38 est supérieur au module d'élasticité du polymère des couches 32,36,40.

Au voisinage de la température ambiante, les couches 32,36,40 ont un coefficient d'amortissement élevé et sont intercalées entre des matériaux plus rigides constitués soit par une des tôles métalliques externes 12,14 soit par une couche 34,38 de polymère relativement rigide. Dans ces conditions, les couches 32,36,40 sont contraintes en cisaillement et absorbent une grande partie de l'énergie de vibration à laquelle est soumise la tôle sandwich.

4

La tôle sandwich 10 selon le second mode de réalisation comporte donc en alternance des couches 32,36,40 de polymères de module d'élasticité faible à la température ambiante et de température de transition TV vitreuse faible et des couches 34,38 de polymères de module d'élasticité σ élevé à la température ambiante et de température de transition vitreuse TV élevée.

On donnera ci-dessous un exemple de réalisation d'une tôle sandwich selon ce second mode de réalisation de l'invention.

| Exemple 3 : | épaisseur (en mm) | matériau |
|---|---|---|
| tôles métalliques externes | 0,35 | acier |
| couches de TV faible et de σ faible | 0,1 | éthylène-acétate de vinyle (EVA) |
| couches de TV élevée et de σ élevé | 0,098 | polyéthylène téréphtalate (PET) |

L'invention permet d'obtenir des tôles sandwichs de faible épaisseur ayant un coefficient d'amortissement largement supérieur au coefficient d'amortissement des tôles sandwichs d'épaisseur équivalente connues dans l'état de la technique.

L'invention permet également d'obtenir un coefficient d'amortissement élevé de la tôle sandwich sur un large intervalle de température.

Les tôles sandwichs selon l'invention sont légères et faciles à fabriquer avec des moyens connus.

Les tôles métalliques externes de la tôle sandwich peuvent être constituées de tous types d'acier.

De plus, de nombreux types de polymères différents peuvent être utilisés pour constituer les couches internes de la tôle sandwich.

**Revendications**

1. Tôle sandwich comprenant deux tôles métalliques (12,14) externes entre lesquelles sont intercalées des couches (16,18,20;32,34,36,38,40) de matériaux internes, caractérisée en ce qu'elle comporte un nombre impair, au moins égal à trois, de couches (16,18,20;32, 34,36,38,40) de polymères intercalées entre les deux tôles métalliques (12,14), deux couches adjacentes quelconques comportant des polymères de modules d'élasticité différents de manière que des couches de polymères (16,18;32,36,40) de module d'élasticité faible alternent avec des couches de polymères (20;34,38) de module d'élasticité élevé, les couches de polymères (16,18;32,40) adjacentes à une des tôles métalliques externes (12,14) comprenant un polymère de module d'élasticité inférieur à celui du polymère de la couche suivante (20;34,38).

2. Tôle sandwich selon la revendication 1, caractérisée en ce qu'elle comporte trois couches (16, 18,20) de polymères intercalées entre les deux tôles métalliques externes (12,14), les deux couches intermédiaires (16,18) disposées de part et d'autre de la couche centrale (20) comportant un polymère identique.

3. Tôle sandwich selon la revendication 2, caractérisée en ce que le module d'élasticité σ de la couche centrale (20) est dix fois supérieur à celui des couches intermédiaires (16,18), pour des températures inférieures ou égales à la température ambiante.

4. Tôle sandwich selon la revendication 2 ou 3, caractérisée en ce que les deux couches intermédiaires (16,18) ont une température de transition vitreuse voisine de la température ambiante et inférieure à la température de transition vitreuse de la couche centrale (20).

5. Tôle sandwich selon la revendication 2, caractérisée en ce qu'elle comporte une couche centrale (20) de

5

polyéthylène téréphtalate et deux couches intermédiaires (16,18) d'éthylène-acétate de vinyle.

6. Tôle sandwich selon la revendication 2, caractérisée en ce qu'elle comporte une couche centrale (20) de polychlorure de vinyle et deux couches intermédiaires (16,18) d'éthylène-acétate de vinyle.

7. Tôle sandwich selon la revendication 1, caractérisée en ce qu'elle comporte cinq couches (32,34, 36,38,40) de polymères intercalées entre les deux tôles externes (12,14), certaines couches (32,36,40) comportant un premier polymère de module d'élasticité faible, les autres couches (34,38) comportant un deuxième polymère de module d'élasticité élevé, les couches (32,36,40) de module d'élasticité faible alternant avec les couches (34,38) de module d'élasticité élevé.

8. Tôle sandwich selon la revendication 7, caractérisée en ce qu'elle comporte en alternance des couches (32,36,40) de polymères de température de transition vitreuse voisine de la température ambiante et des couches (34,38) de polymère de température de transition vitreuse beaucoup plus élevée que la température ambiante.

9. Tôle sandwich selon la revendication 7, caractérisée en ce que les couches (32,36,40) de module d'élasticité faible comprennent de l'éthylène-acétate de vinyle, et les couches (34,38) de module d'élasticité élevé comprennent du polyéthylène téréphtalate.

## FIG · 1

## FIG · 2

## FIG · 3

Office européen
des brevets

# RAPPORT DE RECHERCHE EUROPEENNE

Numero de la demande

EP    93 40 0904

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 177 952 (SUMITOMO CHEMICAL INDUSTRIES LTD.) <br> * page 10, ligne 6 - page 13, ligne 2; revendications 1-4,8,9,22,30 * <br> --- | 1,2,5-7, 9 | B32B7/02 <br> B32B15/08 <br> F16F9/30 <br> F16F3/08 <br> G10K11/16 |
| A | EP-A-0 138 557 (SUMITOMO CHEMICAL CO. LTD.) <br> * revendications 1,2 * <br> --- | 1,2 | |
| A | GB-A-954 908 (BOLT, BERANEK & NEWMAN, INC.) <br> * page 2, ligne 30 - ligne 68; figure 1 * <br> --- | 1,2,7 | |
| A | DE-B-1 132 768 (SIEMENS-SCHUCKERTWERKE A.G.) <br> * colonne 2, ligne 6 - ligne 20; revendication 1 * <br> --- | 1 | |
| P,A | EP-A-0 510 974 (NICHIAS CORP.) <br> * page 3, ligne 16 - ligne 56; revendication 1; figures * <br> ----- | 1,2,7 | **DOMAINES TECHNIQUES RECHERCHES (Int. Cl.5)** <br><br> B32B <br> F16F <br> G10K |

Le présent rapport a été établi pour toutes les revendications

| Lieu de la recherche | Date d'achèvement de la recherche | Examinateur |
|---|---|---|
| LA HAYE | 28 JUIN 1993 | MCCONNELL C.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................
& : membre de la même famille, document correspondant

EPO FORM 1503 03.82 (P0402)